# EUROPEAN PATENT APPLICATION

(11) **EP 1 279 647 A2**
(43) Date of publication of application: **29.01.2003**
(21) Application number: 01131014.1
(22) Date of filing: 28.12.2001
(51) Int. Cl.: C03B 37/018

(54) **Apparatus and method for manufacturing an optical fiber preform by modified chemical vapour deposition**

(30) Priority: 23.07.2001 KR 2001044092
(71) Applicant: SAMSUNG ELECTRONICS CO., LTD., Suwon-City, Kyungki-do (KR)
(72) Inventor: Oh, Sung-Koog, Suwon-city, Kyungki-do (KR); Kim, Jin-Han, Suwon-city, Kyungki-do (KR); Seo, Man-Seok, Suwon-city, Kyungki-do (KR); Kim, Sung-jin, Suwon-city, Kyungki-do (KR); Kim, Yun-Ho, Suwon-city, Kyungki-do (KR)
(74) Representative: Grünecker, Kinkeldey, Stockmair & Schwanhäusser Anwaltssozietät

(57) **Abstract**

An apparatus and method for manufacturing an optical fiber preform by MCVD is disclosed. In the preform manufacturing apparatus, a cylindrical deposition tube receives a source gas through one end and discharges the source gas through the other end. A first heat source is mounted to a guide and forms a first high temperature area inside the deposition tube by heating the outer circumferential surface of the deposition tube. A second heat source is mounted to the guide, apart from the first heat source by a predetermined distance along the length direction of the deposition tube, and forms a second high temperature area inside the deposition tube by heating the outer circumferential surface of the deposition tube. A heat source mover moves the first and second heat sources, maintaining the distance between the first and second heat sources.

## Description

### BACKGROUND OF THE INVENTION

### 1. Field of the Invention

The present invention relates generally to an apparatus and method for manufacturing an optical fiber preform, and in particular, to an apparatus and method for manufacturing an optical fiber preform by a vapor deposition method such as modified chemical vapor deposition (MCVD).

### 2. Description of the Related Art

Optical fiber preforms are the basic component from which optical fiber is drawn and subsequently cabled. Generally, all processes which are used for the production of optical fibers consist of two main steps:
- the manufacture of a glass "preform", which reproduces the desired index profile of the fiber in a thick glass rod, and
- the fiber drawing, which transforms the preform into a thin fiber, including the application of the protective coating.

The manufacture of the glass preform is where the glass material of the fiber is produced. Since ultra-pure glass is required to obtain the extraordinary optical transparency of the fiber, it is synthesized from liquid or gaseous ultra-pure reactants, in general, silicon and germanium chlorides, and oxygen (and hydrogen in the case of external deposition).

The reaction produces very fine soots of silicon and germanium oxide, which are then vitrified into glass. This process (used also to manufacture semiconductors) is generally known as CVD (Chemical Vapor Deposition).

Today, the technologies for the production of preforms can be grouped into three main families:
- Internal Deposition (IVD), where material is grown inside a tube, thus steadily reducing the tube's inner diameter. In this process, vitrification is immediate.
- Outside Deposition (OVD), where deposition is done on a mandrel, which is removed in a later manufacturing stage.
- Axial Deposition (VAD), where deposition is done axially, directly on the glass preform.

IVD and OVD require a collapse stage to close the hole which remains at the preform center after the deposition stage. OVD and VAD require a sintering stage, to vitrify the soots after deposition.

As discussed above, optical fiber preforms may be manufactured by various vapor deposition methods, for example, MCVD, VAD (Vapor phase Axial Deposition), OVD (Outside Vapor phase Deposition), or the like.

In MCVD, various liquids which provide the source for and dopants are heated in the presence in oxygen gas. Chemical reactions called *oxidizing* reactions occur in the vapor phase. The main advantage of MCVD is that the reactions and deposition occur in a closed space, so it is harder for impurities to enter. The index profile of the fiber is easy to control, and the precision necessary for SM fibers can be achieved relatively easily. The equipment is simple to construct and control.

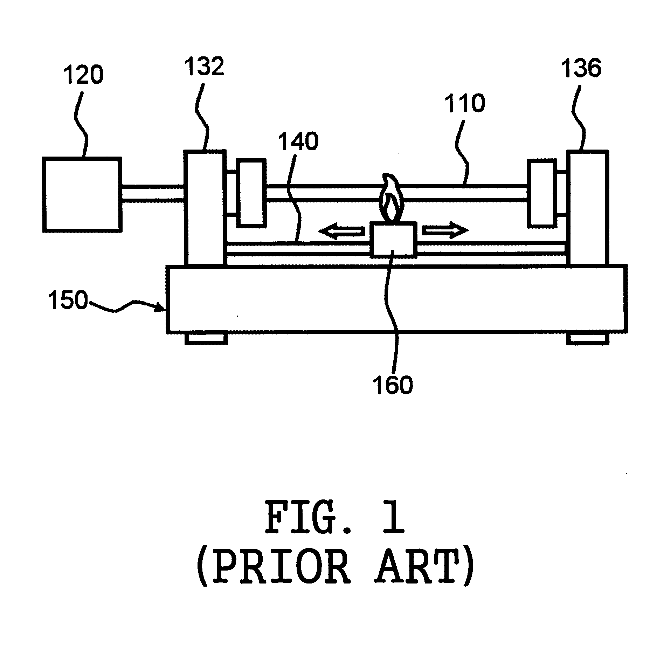

FIG. 1 is a schematic view of a conventional optical fiber preform manufacturing apparatus using MCVD. The conventional preform manufacturing apparatus includes a source gas supply 120, a shelf 150, and an oxygen/hydrogen burner 160.

The source gas supply 120 supplies a source gas of oxygen mixed with other additional materials, for example, SiCl4, GeCl4, POCl₃, etc. into a deposition tube 110.

The shelf 150 is provided with a pair of chucks 132 and 136 and a guide 140. Both ends of the deposition tube 110 are rotatably fixed to the pair of chucks 132 and 136. The oxygen/hydrogen burner 160 is movably mounted to the guide 140. The oxygen/hydrogen burner 160 receives hydrogen and oxygen and moves at a predetermined velocity along the guide 140, heating the outer circumferential surface of the deposition tube 110.

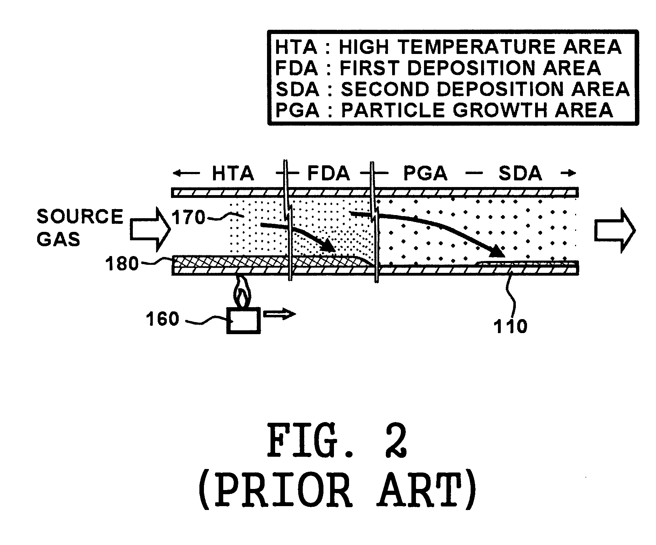

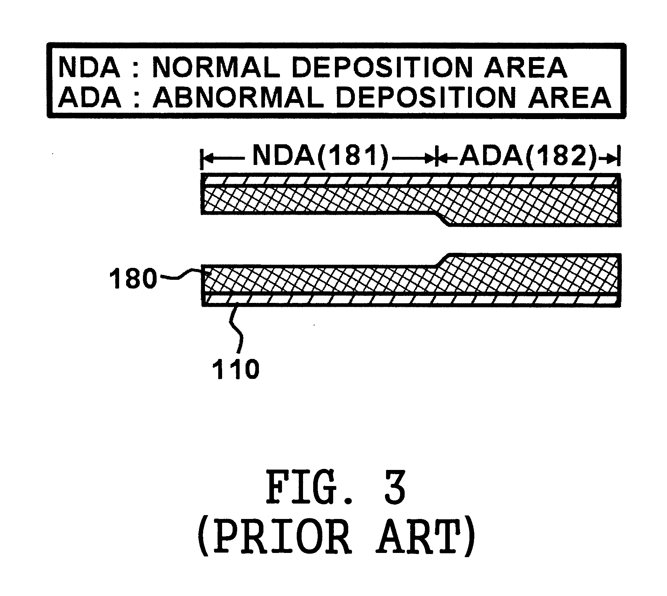

FIGs. 2 and 3 are views illustrating an optical fiber preform manufacturing method by the apparatus shown in FIG. 1. In FIG. 2, the deposition tube 110 and the oxygen/hydrogen burner 160 for heating the outer circumferential surface of the deposition tube 110 are shown. The deposition tube 110 rotates at a predetermined velocity, being heated by the oxygen/hydrogen burner 160. As a consequence, a high temperature area is formed inside the deposition tube 110.

The source gas flowing through the high temperature area produces a reactant 170. The reaction equation is, for example, SiCL₄ + O₂ → SiO₂ + 2Cl₂, or GeCl₄ + O₂ → GeO₂ + 2Cl₂. The reactant 170 moves to the inner wall of the deposition tube 110 whose temperature is relatively low and is deposited onto the inner wall by the thermophoretic mechanism. FIG. 2 illustrates a first deposition area resulting from the primary deposition.

However, the remaining reactant 170 that is not deposited to the inner wall of the deposition tube 110 moves further by a flow formed inside the deposition tube 110. During the movement, the reactant 170 is grown due to particle collision. In other words, the size and mass of the reactant particles increase. The grown reactant 170 moves to the inner wall of the deposition tube 110 and then is deposited to the inner wall. FIG. 2 also illustrates a second deposition area resulting from the secondary deposition.

FIG. 3 illustrates a resultant structure from the above-described method. A layer 180 deposited on the inner wall of the deposition tube 110 is divided into a normal deposition area 181 and an abnormal deposition area 182. In the normal deposition area, the layer 180 exhibits a uniform particle size and a uniform composition ratio, where as in the abnormal deposition area, it exhibits non-uniformity in particle size, composition ratio, and geometrical structure.

As describe above, the conventional apparatus and method for manufacturing an optical fiber preform by MCVD has the shortcoming that the preform exhibits non-uniform physical properties along the length direction due to the simultaneous primary and secondary deposition processes.

### SUMMARY OF THE INVENTION

One object of the present invention to provide an apparatus and method for manufacturing an optical fiber preform by MCVD, which ensures uniform physical properties in the optical fiber preform

Another object of the present invention is to stabilize the geometrical structure of a layer deposited on the inner wall of a deposition tube by suppressing secondary deposition.

The above and other objects can be achieved by providing an apparatus and method for manufacturing an optical fiber preform by MCVD. In the preform manufacturing apparatus, a cylindrical deposition tube receives a source gas through one end and discharges the source gas through the other end. A first heat source is mounted to a guide and forms a first high temperature area inside the deposition tube by heating the outer circumferential surface of the deposition tube. A second heat source is mounted to the guide, apart from the first heat source preferably by a predetermined distance along the length direction of the deposition tube, and forms a second high temperature area inside the deposition tube by heating the outer circumferential surface of the deposition tube. A heat source mover moves the first and second heat sources, preferably maintaining the distance between the first and second heat sources.

In one preform manufacturing method of the present invention, a first high temperature area is formed inside a cylindrical deposition tube using a first heat source. A reactant is produced from a source gas by injecting the source gas through the first high temperature area. The reactant is deposited onto the inner wall of the cylindrical deposition tube in a thermalphoretic mechanism. The reactant that is grown by particle collision and moves toward the inner wall of the deposition tube is floated by forming a second high temperature area inside the deposition tube using a second heat source to prevent the grown reactant from being deposited onto the inner wall of the deposition tube.

In another embodiment of the present invention, an apparatus for manufacturing an optical fiber preform by vapor deposition includes a cylindrical deposition tube having one end for receiving a source gas and the other end for discharging the source gas. The apparatus also includes first heat means for forming a first high temperature area inside the deposition tube and second heat means for forming a second high temperature area inside the deposition tube. The apparatus further includes a heat source mover for moving the first and second heat sources preferably while maintaining the predetermined distance between the first and second heat means.

### BRIEF DESCRIPTION OF THE DRAWINGS

The above and other features and advantages of the present invention will become more apparent from the following detailed description when taken in conjunction with the accompanying drawings in which:
FIG. 1 is a schematic view of a conventional optical fiber preform manufacturing apparatus by MCVD;
FIGs. 2 and 3 illustrate a conventional optical fiber preform manufacturing method using the apparatus shown in FIG. 1;
FIGs. 4 and 5 illustrate an optical fiber preform manufacturing method by MCVD according to one embodiment of the present invention; and
FIG. 6 is a schematic view of an optical fiber preform manufacturing apparatus by MCVD according to another embodiment of the present invention.

### DETAILED DESCRIPTION OF THE PREFERRED EMBODIMENT

In the following description, for purposes of explanation rather than limitation, specific details are set forth such as the particular architecture, interfaces, techniques, etc., in order to provide a thorough understanding of the present invention. For purposes of simplicity and clarity, detailed descriptions of well-known devices, circuits, and methods are omitted so as not to obscure the description of the present invention with unnecessary detail.

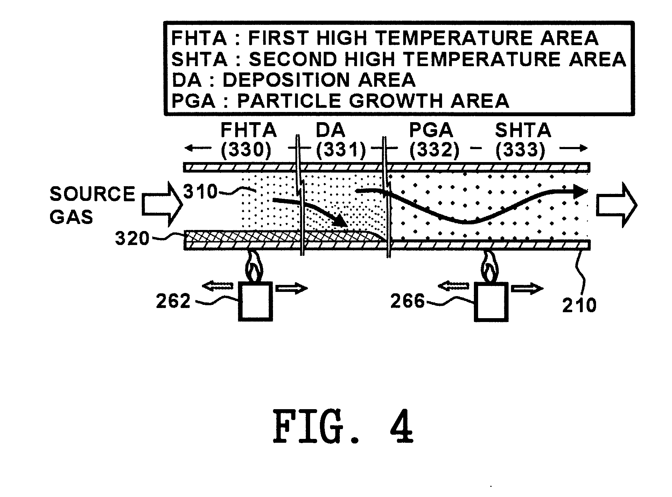

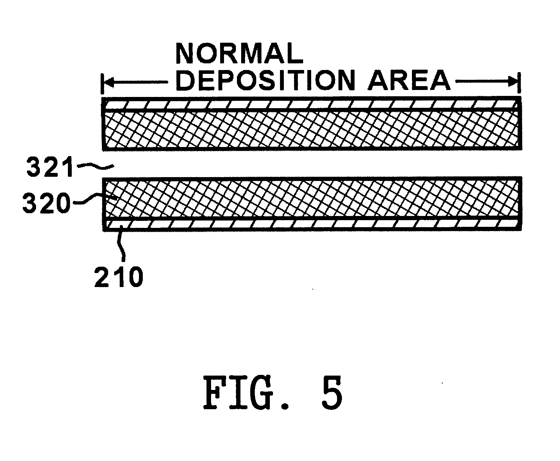

FIGs. 4 and 5 illustrate an optical fiber preform manufacturing method by MCVD according to a preferred embodiment of the present invention. In FIG. 4, a deposition tube 210 and a first and a second heat sources 262 and 266 for heating the outer circumferential surface of the deposition tube 210 are shown.

The deposition tube 210 receives a source gas from one end thereof. The deposition tube 210 rotates at a predetermined velocity and an inner flow traveling from one end of the deposition tube 210 to the other end thereof is formed inside the deposition tube 210.

The first heat source 262 forms a first high temperature area 330 inside the deposition tube 210 by heating the outer circumferential surface of the deposition tube 210. The source gas produces a reactant 310 while passing through the first high temperature area 330. The reactant 310 is deposited onto the inner wall of the deposition tube 210 by the thermophoretic mechanism. FIG. 4 illustrates a deposition area 331 resulting from the deposition process.

The remaining reactant 310 that is not deposited to the inner wall of the deposition tube 210 moves further by the flow and is grown due to particle collision during the movement. FIG. 4 illustrates a particle growth area 332 resulting from the growing process. The grown reactant 310 then moves to the inner wall of the deposition tube 210.

The second heat source 266 is spaced from the first heat source 262 by a predetermined distance along the length direction of the deposition tube 210. The exact distance may vary, but it is generally placed in the area where grown reactant 310 moves and would be deposited on the inner wall during the secondary deposition. The second heat source 266 forms a second high temperature area 333 inside the deposition tube 210 by heating the outer circumferential surface of the deposition tube 210. As a consequence, the grown reactant 310 moving toward the inner wall of the deposition tube 210 veers toward the center, that is, floats. The second heat source 266 functions to suppress deposition of the grown reactant 310 from being deposited onto the inner wall of the deposition tube 210. Thereafter, the grown reactant 310 is discharged actively from the deposition tube 210.

FIG. 5 illustrates a resultant structure from the above-described manufacturing method. A layer 320 deposited on the inner wall of the deposition tube 210 shows substantial uniformity in geometrical structure 321 as well as in particle size and composition ratio along the overall length direction.

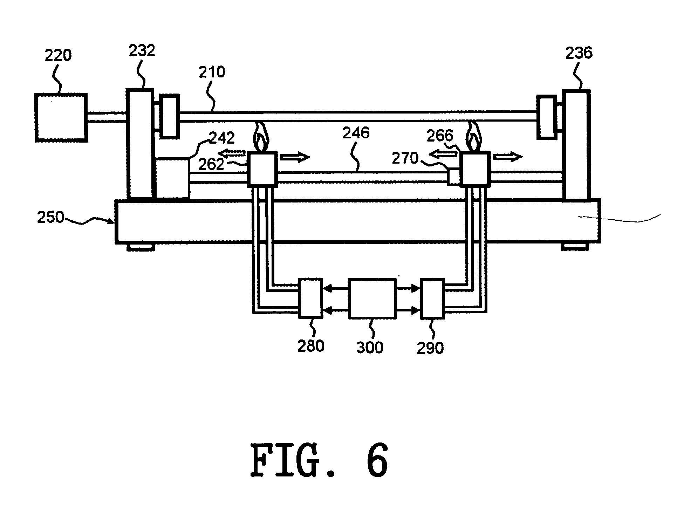

FIG. 6 is a schematic view of an optical fiber preform manufacturing apparatus by MCVD according to a preferred embodiment of the present invention. Referring to FIG. 6, the apparatus includes a source gas supply 220, a shelf 250, the first and second heat sources 262 and 266, and a guide 246. The apparatus also includes a heat source mover 242, a position sensor 270, a first and a second flow rate controller 280 and 290, and a controller 300.

The source gas supply 220 supplies a source gas of oxygen mixed with other materials, for example, SiCl₄, GeCl₄, POCl₃, freon, etc. into the deposition tube 210.

The shelf 250 is provided with a pair of chucks 232 and 236 and the guide 246. Both ends of the deposition tube 210 are rotatably fixed to the pair of chucks 232 and 236. The first and second heat sources 262 and 266 are movably mounted to the guide 246. The guide 246 is generally installed in parallel to the length direction of the deposition tube 210.

The first and second heat sources 262 and 266 receive hydrogen and oxygen and can move at a predetermined velocity along the guide 246. The first and second heating sources heat the outer circumferential surface of the deposition tube 210. Other types of heat sources may also be used such as plasma torches can be used instead of oxygen/hydrogen burners for the first and second heat sources 262 and 266. The first and second heat sources 262 and 266 may be circular, rod-shaped, or plate-shaped.

The heat source mover 242 controls the velocities of the first and second heat sources 262 and 266 according to movement control signals received from the controller 300. When moving, the first and second heat sources 262 and 266 maintain their predetermined distance apart from each other. To ensure a full deposition area 331 in the deposition tube 210, the distance is preferably 300mm or greater.

The position sensor 270 senses the position of the second heat source 266 and outputs a corresponding position sensing signal to the controller 300. Since the second heat source 266 is spaced from the first heat source 262 by the predetermined distance, it may happen that the first heat source 262 is within the range of the deposition tube 210, whereas the second heat source 266 is beyond the deposition tube range. To prevent this case, the position sensor 270 checks whether the second heat source 266 is within the range of the deposition tube 210.

The first and second flow rate controllers 280 and 290 control the flow rates of fuel, that is, oxygen and hydrogen to the first and second heat sources 262 and 266, respectively according to flow rate control signals received from the controller 300.

The controller 300 outputs a movement control signal to the heat source mover 242 to control the velocities of the first and second heat sources 262 and 266. The controller 300 receives a position sensing signal representing the position of the second heat source 266 from the position sensor 270. In the case where the second heat source 266 is out of the range of the deposition tube 210, the controller 300 outputs a flow rate control signal to the second flow rate controller 290 to block the fuel from the second heat source 266 and thus to prevent unnecessary fuel dissipation. Then, the first and second heat sources 262 and 266 can return to their home positions before covering the next deposition path.

The controller 300 comprises a microprocessor or the like for executing computer readable code, i.e., applications related to the functions noted above. Such applications may be stored in an internal memory or, alternatively, on a floppy disk in disk drive or a CD-ROM in a CD-ROM drive. The controller accesses the applications (or other data) stored on a floppy disk via the memory interface and accesses the applications (or other data) stored on a CD-ROM via CD-ROM drive interface. The controller 300 may also include a remote communication interface.

As noted above, the functions of the controller 300 may be implemented by computer readable code executed by a data processing apparatus. The code may be stored in a memory within the data processing apparatus or read/downloaded from a memory medium such as a CD-ROM or floppy disk. In other embodiments, however, hardware circuitry may be used in place of, or in combination with, software instructions to implement the invention.

As described above, the apparatus and method for manufacturing an optical fiber preform by MCVD according to various aspect and embodiments of the present invention offer the benefit of suppression of the secondary deposition of a grown reactant by forming a second high temperature area in a deposition tube using a second heat source. Therefore, the optical fiber preform exhibits uniform physical properties and has a stable geometrical structure.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An apparatus for manufacturing an optical fiber preform by vapor deposition, comprising:
a cylindrical deposition tube (210) having one end for receiving a source gas and the other end for discharging the source gas;
a first heat source (262) mounted to a guide (246), for forming a first high temperature area (330) inside the deposition tube (210) by heating the outer circumferential surface of the deposition tube (210);
**characterized by**,
a second heat source (266) mounted to the guide (246) apart from the first heat source (262) for forming a second high temperature area (333) inside the deposition tube (210) by heating the outer circumferential surface of the deposition tube (210); and
a heat source mover for moving the first and second heat sources.

2. The apparatus of claim 1,
**characterized by**
the second heat source (266) being mounted to the guide (246) apart from the fist heat source (262) by a predetermined distance along the length direction of the deposition tube (210), and/or the heat source mover for moving the first and second heat sources while maintaining the predetermined distance between the first and second heat sources.

3. The apparatus of claim 1 or 2,
**characterized in that**
the vapor deposition is MCVD.

4. The apparatus of claim 3,
**characterized by**
a first flow rate controller (280) and a second flow rate controller (290) connected to the first (262) and second (266) heat sources respectively, for controlling the volume of fuel to the first (262) and second (266) heat sources;
a position sensor (270) for outputting a position sensing signal representing the position of the second heat source (266); and
a controller (300) for outputting a flow rate control signal to the second flow rate controller (290) in order to reduce the fuel to the second heat source (266) if it is determined from the position sensed signal that the second heat source (270) is beyond a predetermined position.

5. The apparatus of any of claims 1 to 4, wherein the predetermined distance is 300 mm or greater.

6. A method of manufacturing an optical fiber preform by MCVD, comprising the steps of:
forming a first high temperature area (330) inside a cylindrical deposition tube (210) using a first heat source (262);
producing a reactant form a source gas by injecting the source gas through the first high temperature area (330);
depositing the reactant onto an inner wall of the cylindrical deposition tube (210) in a thermalphoretic mechanism; and
forming a second high temperature area (333) inside the deposition tube (210) using a second heat source (266) to prevent the grown reactant from being deposited onto the inner wall of the deposition tube (210).

7. The method of claim 6, wherein the grown reactant that moves toward the inner wall of the deposition tube (210) is floated due to the second high temperature area (330).

8. The method of calm 6 or 7, further comprising the step of moving the first and second heat sources while maintaining a predetermined space there between.

9. An apparatus for manufacturing an optical fiber preform by vapor deposition, comprising:
a cylindrical deposition tube (210) having one end for receiving a source gas and the other end for discharging the source gas;
first heat means (262) for forming high temperature area (330) inside the deposition tube (210);
**characterized by**
second heat means (266) for forming a second high temperature area (333) inside the deposition tube (210); and
a heat source mover for moving the first and second heat sources.

10. The apparatus of claim 9,
**characterized by**
the heat source mover for moving the first and second heat sources while maintaining the predetermined distance between the first and second heat means.

11. The apparatus of claim 9 or 10, wherein the vapor deposition is MCVD.

12. The apparatus of claim 10 or 11, further comprising means (280,290,300) for controlling fuel to the first and second heat means and for controlling the heat source mover.
